(19) Europäisches Patentamt European Patent Office Office européen des brevets

(11) **EP 3 214 603 B1**

(12) **EUROPEAN PATENT SPECIFICATION**

(45) Date of publication and mention
of the grant of the patent:
**19.03.2025 Bulletin 2025/12**

(21) Application number: **17150444.2**

(22) Date of filing: **05.01.2017**

(51) International Patent Classification (IPC):
**G06T 7/12** *(2017.01)*     **G06T 7/136** *(2017.01)*
**G06T 7/11** *(2017.01)*     **G06T 7/194** *(2017.01)*

(52) Cooperative Patent Classification (CPC):
**G06T 7/136; G06T 7/11;** G06T 2207/20012;
G06T 2207/20021

(54) **IMAGE PROCESSING**

BILDVERARBEITUNG

TRAITEMENT D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2016 CN 201610118800**

(43) Date of publication of application:
**06.09.2017 Bulletin 2017/36**

(73) Proprietor: **Zhejiang Uniview Technologies Co.,
Ltd
Hangzhou City, Zhejiang (CN)**

(72) Inventor: **WANG, Yaonong
Hangzhou City, Zhejiang (CN)**

(74) Representative: **Bandpay & Greuter
11 rue Christophe Colomb
75008 Paris (FR)**

(56) References cited:
• CAI JINHAI ET AL: "Surface fitting for individual image thresholding and beyond", IET IMAGE PROCES, IET, UK, vol. 7, no. 6, 1 August 2013 (2013-08-01), pages 596 - 605, XP006045764, ISSN: 1751-9659, DOI: 10.1049/IET-IPR.2012.0690
• SHEN D ET AL: "A Hopfield neural network for adaptive image segmentation: An active surface paradigm", PATTERN RECOGNITION LETT, ELSEVIER, AMSTERDAM, NL, vol. 18, no. 1, 1 January 1997 (1997-01-01), pages 37 - 48, XP004729995, ISSN: 0167-8655, DOI: 10.1016/ S0167-8655(96)00117-1
• BLAYVAS I ET AL: "Efficient computation of adaptive threshold surfaces for image binarization", PATTERN RECOGNITION, ELSEVIER, GB, vol. 39, no. 1, 1 January 2006 (2006-01-01), pages 89 - 101, XP028055520, ISSN: 0031-3203, [retrieved on 20060101], DOI: 10.1016/ J.PATCOG.2005.08.011

## Description

### CROSS REFERENCE TO RELATED APPLICATIONS

This application claims priority to Chinese Patent Application No. 201610118800.2, titled as BLOCK PLANE FITTING-BASED IMAGE BINARYZATION METHOD AND DEVICE, filed on March 2, 2016.

### TECHNICAL FIELD

The present disclosure relates to image processing.

### BACKGROUND

A binarization method may be a commonly-used method for processing an image, and many high-level algorithms used for target detection or recognition may rely on binarization effects. Taking license plate recognition as an example, a binarization process may be carried out for images of license plates before the images are recognized.

One of the binarization methods is an OTSU binarization method, wherein an original image may be divided into a foreground image and a background image by using a threshold, and a difference between the background and the foreground may be the largest when the threshold is optimal. A criterion for measuring the difference may be determined according to the actual situation. However, in an image process according to the OTSU method, the criterion for measuring a difference may be a maximal variance between-class.

An image may have a better binarization effect when illuminated evenly, whereas it may have a poor binarization effect when illuminated unevenly, for example, when illuminated by a light source from sides.

Document CAI JINHAI ET AL: "Surface fitting for individual image thresholding and beyond", IET IMAGE PROCES, IET, UK, vol. 7, no. 6, 1 August 2013-(2013-08-01), pages 596-605, XP006045764, ISSN: 1751-9659, DOI: 10.1049/IET-IPR.2012.0690 discloses a method of surface fitting for individual image thresholding.

### SUMMARY

The invention is defined in the independent claims. Particular embodiments are set out in the dependent claims.

A method of processing an image according to claim 1 is provided.

According to another aspect of the present disclosure, a device for processing image according to claim 4 is provided.

According to a method and device for processing image provided by the examples of the present disclosure, local or global binarization information of an image may be combined for use so that the image may have a better robustness no matter the image is illuminated evenly or unevenly. A binarization threshold of the image may be comparatively accurately obtained even though the image is divided into fewer sub-regions so that both accuracy and efficiency may be taken into account. In addition, the present disclosure further provides a concept of fitting matrix corresponding to an image division mode. Time spent in on-line calculation may be reduced by calculating the fitting matrix in advance, thereby improving a threshold calculation speed.

### BRIEF DESCRIPTION OF DRAWINGS

To describe the technical solutions in the examples of the present disclosure more clearly, the following will briefly introduce the accompanying drawings required for describing the examples. Apparently, the accompanying drawings in the following description show merely some examples of the present disclosure, and persons of ordinary skill in the art may still derive other drawings from these accompanying drawings without creative efforts.

FIG. 1 is a flowchart of a method for processing an image according to an example of the present disclosure.
FIG. 2 is a flowchart of a method for acquiring a relational expression in this example.
FIG. 3A is a schematic diagram illustrating an image division mode according to an example of the present disclosure;
FIG. 3B is a schematic diagram illustrating a central coordinate matrix corresponding to the division mode as shown in FIG. 3A;
FIG. 3C is a schematic diagram illustrating a fitting matrix corresponding to the division mode as shown in FIG. 3A;
FIG. 4A is a schematic diagram illustrating an image division mode according to an example of the present disclosure;
FIG. 4B is a schematic diagram illustrating a central coordinate matrix corresponding to the division mode as shown in FIG. 4A;
FIG. 4C is a schematic diagram illustrating a fitting matrix corresponding to the division mode as shown in FIG. 4A;
FIG. 5A is a sectional view of an image inputted according to an example of the present disclosure;
FIG. 5B is a threshold sectional view obtained by binarizing the image as shown in FIG. 5A using the OTSU method;
FIG. 5C is a threshold sectional view obtained by performing a local threshold calculation on the image as shown in FIG. 5A using a nine-grid division mode;
FIG. 5D is a threshold plane graph obtained by binarizing the image as shown in FIG. 5A according to an example of the present disclosure;

FIG. 6A is a schematic diagram of an original image inputted according to this example;

FIG. 6B is an effect view obtained after binarizing the image in FIG. 6A by using the OTSU method;

FIG. 6C is an effect view obtained after binarizing the image in FIG. 6A by using a local binarization method;

FIG. 6D is an effect view obtained after binarizing the image in FIG. 6A according to an example of the present disclosure;

FIG. 7A is a schematic diagram of a group of original images inputted according to this example;

FIG. 7B is a an effect view obtained after binarizing the images as shown in FIG. 7A using the OTSU method;

FIG. 7C is an effect view obtained after binarizing the images as shown in FIG. 7A by using a local binarization method;

FIG. 7D is an effect view obtained after binarizing the images as shown in FIG. 7A according to an example of the present disclosure;

FIG. 8 is a schematic diagram of a hardware structure of a device for processing an image according to an example of the present disclosure; and

FIG. 9 is a block diagram of functional modules for binarization control logic according to an example of the present disclosure.

## DETAILED DESCRIPTION

The following will clearly and completely describe the technical solutions in the examples of the present disclosure with reference to the accompanying drawings in the present disclosure. Apparently, the described examples are merely some but not all of the examples of the present disclosure. All other examples obtained by persons of ordinary skill in the art based on the examples of the present disclosure without creative efforts shall fall within the protection scope of the present disclosure.

Based on what is described in the background, a method for processing an image may be proposed for binarization of sub-regions of the image. However, if sub-regions are larger, a variation of a threshold between two adjacent sub-regions may be very large, which may cause a larger error to exist in a joint position, thereby making image quality be deteriorated. To reduce the error, an image may be divided into a larger number of sub-regions to ensure that a variation of a threshold between sub-regions may be smaller, but this may cause a problem that an image processing efficiency is reduced because a complexity of calculation is increased.

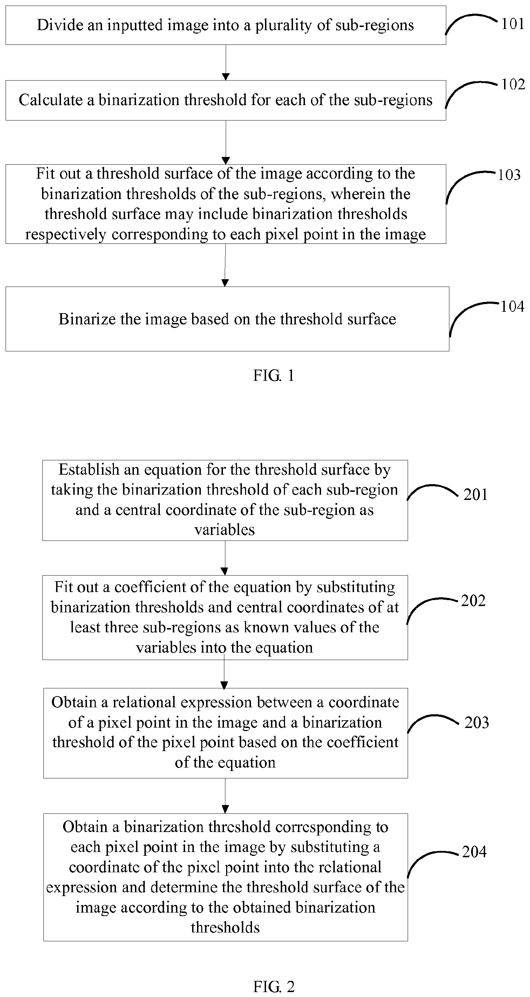

According to one example of the present disclosure, a method for processing an image is provided, which may be used in any device related to image processing, for example, a camera, and CT imaging equipment, etc. FIG. 1 illustrates a method for processing an image according to an example of the present disclosure, wherein the method may include following blocks.

At block 101, an inputted image is divided into a plurality of sub-regions.

For example, an inputted image is divided into a plurality of sub-regions, wherein each sub-region may be denoted by src (i, j) (i and j are natural numbers). The division mode may be various and may be determined according to practical conditions and requirements. For example, an image may be divided evenly or may be divided unevenly, a number of rows and a number of columns of sub-regions obtained after the division may be different, and the size of the sub-region may be changed according to needs. For example, the inputted image may be divided into 2*2, 3*3, 2*3 or 3*4 sub-regions. For ease of determining a central coordinate of each sub-region, in this example, a evenly-division mode may be adopted, and a number of rows and a number of columns of sub-regions obtained after the division may be equal.

At block 102, a binarization threshold for each of the sub-regions is calculated.

A binarization threshold is calculated for each sub-region obtained at block 101. A method for calculating the binarization threshold of each sub-region may not be limited, and the known OTSU or a mean value calculation method or the like may be adopted. According to the mean value calculation method, for example, a mean value of gray values of pixel points of each sub-region may be taken as the binarization threshold corresponding to the sub-region.

At block 103, a threshold surface of the image is fitted out according to the binarization thresholds of the sub-regions, wherein the threshold surface includes binarization thresholds respectively corresponding to each pixel point in the image.

In one example, this block may be achieved through various blocks as shown in FIG. 2.

At block 201, an equation may be established for the threshold surface by taking the binarization threshold and a central coordinate of each of the sub-regions as variables.

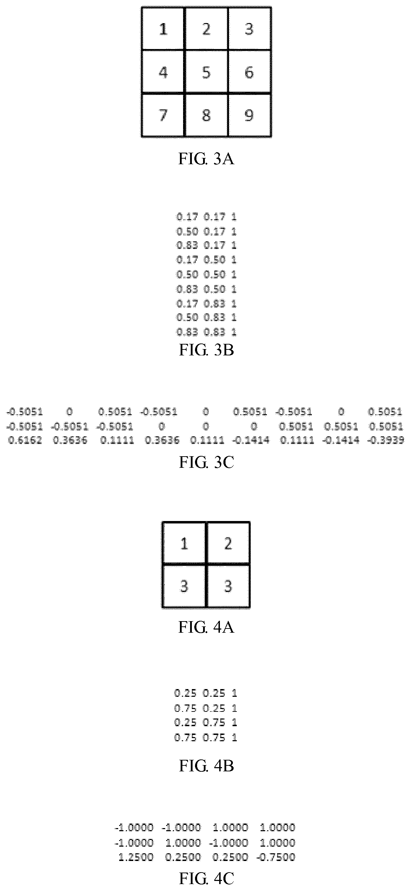

The central coordinate of each sub-region may be determined according to an image division mode, and the central coordinate of the $i^{th}$ sub-region may be denoted as $(x_i, y_i)$. Refer to FIG. 3A~FIG. 4C, wherein FIG. 3A shows an image division mode adopted in this example; and FIG. 3B shows a central coordinate matrix obtained by calculation according to the division mode in FIG. 3A. Reference may be made to FIG. 4B for the central coordinate matrix if the image division takes the 2*2 mode as shown in FIG. 4A.

In this example, a relationship between the binarization threshold of the image and the coordinate position of a pixel point in the image may be denoted by a plane equation. For example, if a two-dimensional coordinate of a pixel point in the image is denoted by P(x, y), the binarization threshold corresponding to the pixel point may be denoted by t. First of all, the plane equation may be set as below:

$$a'x + b'y + c'z + d = 0$$

(Formula 1)

In Formula 1, a', b', c' and d are coefficients of the plane equation. By substituting the abscissa x, the ordinate y and the binarization threshold t of the pixel point as a three-dimensional coordinate point into Formula 1, a threshold plane equation may be obtained as below:

$$a'x + b'y + c't + d = 0$$

(Formula 2)

At block 202, a coefficient of the equation may be fitted out by substituting binarization thresholds and central coordinates of at least three sub-regions as known values of the variables into the equation.

Then, a linear relational expression in two unknowns of the binarization threshold t of the whole image with respect to a coordinate position (x, y) on the image may be obtained by transforming the threshold plane equation as shown in Formula 2:

$$t = ax + by + c$$

(Formula 3)

wherein

$$a = -\frac{a'}{c'}, \quad b = -\frac{b'}{c'}, \quad c = -\frac{d}{c'},$$

, there are three coefficients a, b and c to be solved, at least three points may be required to fit out a plane, and a nine-grid division mode may be taken as an example:

$$\begin{bmatrix} t_1 \\ t_2 \\ t_3 \\ \cdots \\ t_9 \end{bmatrix} = \begin{bmatrix} x_1 & y_1 & 1 \\ x_2 & y_2 & 1 \\ x_3 & y_3 & 1 \\ \cdots & \cdots & \cdots \\ x_9 & y_9 & 1 \end{bmatrix} \times \begin{bmatrix} a \\ b \\ c \end{bmatrix}$$

(Formula 4)

$t_1 \sim t_9$ are binarization thresholds of each sub-region, $(x_i, y_i)$ is the central coordinate of each sub-region, and $\begin{bmatrix} a \\ b \\ c \end{bmatrix}$ is the coefficient to be solved. If

$$T = \begin{bmatrix} t_1 \\ t_2 \\ t_3 \\ \cdots \\ t_9 \end{bmatrix}, \quad A = \begin{bmatrix} x_1 & y_1 & 1 \\ x_2 & y_2 & 1 \\ x_3 & y_3 & 1 \\ \cdots & \cdots & \cdots \\ x_9 & y_9 & 1 \end{bmatrix}, \text{ and } x = \begin{bmatrix} a \\ b \\ c \end{bmatrix}, \text{ a}$$

formula may be obtained as below:

$$T = Ax \text{ (Formula 5)}$$

A coefficient matrix x formed by the coefficients may be solved by using a least square method:

$$\left(A^T A\right)^{-1} A^T T = \left(A^T A\right)^{-1} A^T A x = x \text{ (Formula 6)}$$

The coefficient matrix x may be obtained as below:

$$x = \left(A^T A\right)^{-1} A^T T \text{ (Formula 7)}$$

Herein, $(A^T A)^{-1} A^T$ may be designated as a fitting matrix B, and T may denote a sub-region threshold vector.

The fitting matrix B in this example may be schematically shown in FIG. 3C. Reference may be made to FIG. 4C for the fitting matrix if it is a division mode of 2*2.

As can be seen according to Formula 7, to obtain the coefficient of the relational expression at block 202, the fitting matrix and the binarization threshold of each sub-region may need to be known. However, the fitting matrix may be only related to a sub-region division mode but unrelated to an inputted image and the binarization threshold of each sub-region. Since the size of the inputted image is determined, once the sub-region division mode of the image is determined, the central coordinate of each sub-region may be determined, then a matrix A may be determined, and finally the fitting matrix may be calculated out. Therefore, a plurality of sub-region division modes and corresponding fitting matrixes may be preset to facilitate calculation of an image threshold without solving a transformation matrix on line. In this example, for a plurality of sub-region division modes, a fitting matrix corresponding to each of them may be calculated and saved. When an image is to be binarized, a fitting matrix corresponding to the image may be determined once a sub-region division mode is selected.

At block 203, a relational expression between a coordinate of a pixel point in the image and a binarization threshold of the pixel point may be obtained based on the coefficient of the equation.

After fitting out the coefficient of the threshold plane equation at block 202, referring to Formula 3, the relational expression between a coordinate of a pixel point in the image and a binarization threshold of the pixel point may be determined.

At block 204, a binarization threshold corresponding to each pixel point in the image may be obtained by substituting a coordinate of the pixel point into the relational expression so that the threshold surface of the image may be determined.

By the above method, the binarization threshold of each sub-region may be obtained, a matrix multiplication may be performed on a fitting matrix and the binarization threshold of each sub-region, and then a fitting relational expression between binarization threshold of a whole image and a pixel point in the image may be obtained. In this way, a global threshold surface of the whole image may be determined. By this means, time consumed in on-line calculation may be reduced.

A relationship between the binarization threshold of the image and the coordinate position of a pixel point in the image may be obtained by using other models. For example, a three-dimensional coordinate point defined by the binarization threshold and the central coordinate of each sub-region may be regarded as a point on an ellipsoid surface or a point on a spherical surface, and a relationship between them both may be obtained by establishing an ellipsoid surface equation or a spherical surface equation and fitting out an equation coefficient. Out of consideration for simple calculation and high applicability, the relationship between the binarization threshold and the pixel point location may be better reflected by using a plane equation.

At block 104, the image may be binarized based on the threshold surface.

Referring to Formula 7, a fitting coefficient x may be obtained by multiplying the fitting matrix A by the sub-region threshold T.

A threshold plane TH (x, y) may be obtained according to the fitting coefficient, wherein the calculation method is seen in Formula 3.

A gray value of a pixel point P(x, y) may be denoted by G, when G(x, y)>TH(x, y), G(x, y)=1; otherwise G(x, y)=0. Thus, an original image may be transformed into a binarization image based on the threshold surface.

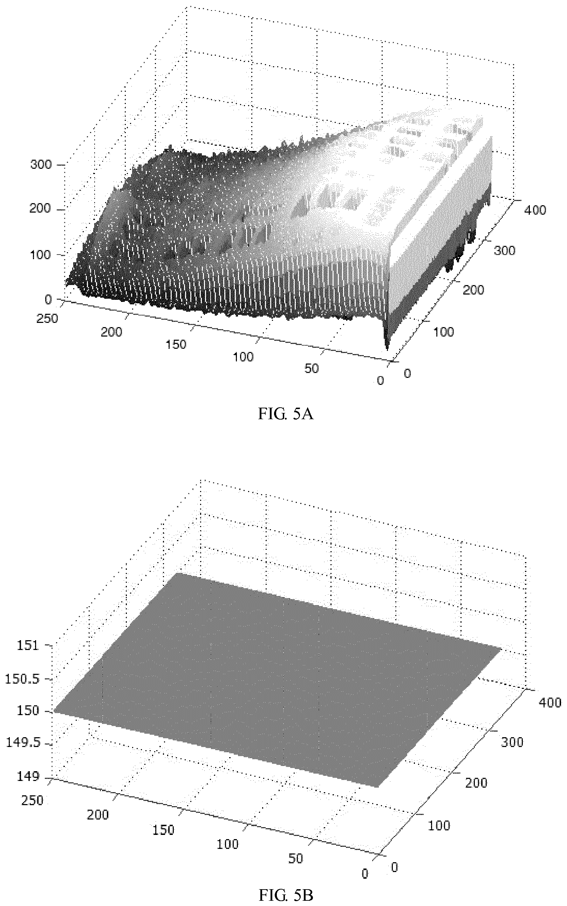

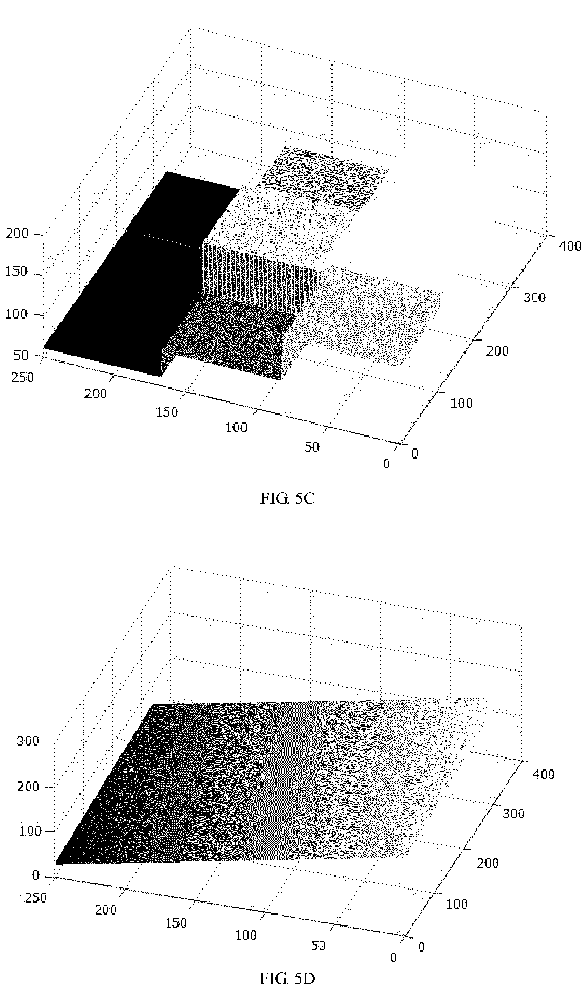

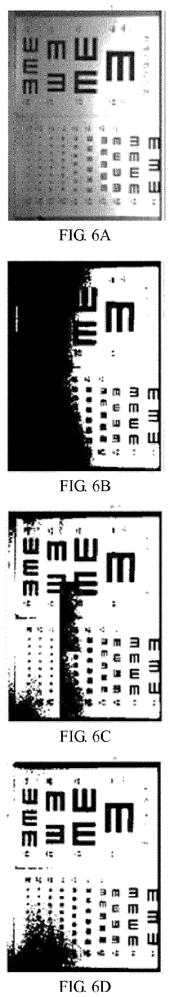

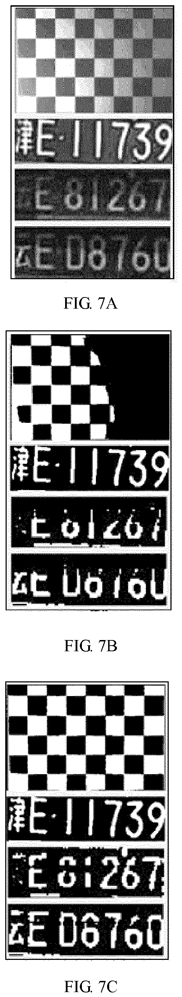

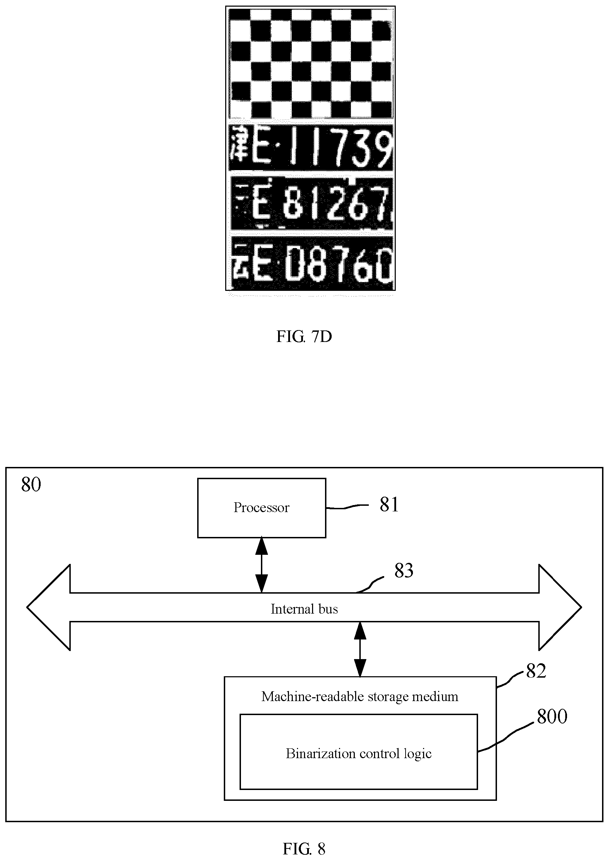

By using the method in the examples of the present disclosure, reference may be made to FIG. 5A-FIG. 5D for the whole threshold obtained. FIG. 5A is a sectional view of the original image; FIG. 5B is a threshold sectional view obtained by using the OTSU method; FIG. 5C is a threshold sectional view obtained by performing a local threshold calculation; and FIG. 5D is a threshold plane graph obtained according to the examples of the present disclosure. Gray part may indicate a background, and white part may indicate a foreground. As can be seen, the threshold obtained according to the OTSU method may be uniform with respect to the whole image. Effect difference between the OTSU method or the local binarization threshold calculation method and the method according to the examples of the present disclosure may be seen in FIG. 6A~FIG. 7D. FIG. 6A and FIG. 7A show original images; FIG. 6B and FIG. 7B respectively are effect views obtained by binarizing the original images using the OTSU method; FIG. 6C and FIG. 7C respectively are effect views obtained by dividing the original images into sub-regions and binarizing each sub-region; and FIG. 6D and FIG. 7D respectively are effect views obtained by binarizing the original images according to the examples of the present disclosure. As can be seen, a large error may exist when an image which is unevenly illuminated is binarized using the OTSU method. The effect may be improved by using the local sub-region division method than the OTSU method. However, as shown in FIG. 6C and FIG. 7C, a larger error may exist in binarization segmentation since thresholds of joints among sub-regions are inconsistent. As can be seen from FIG. 6D and FIG. 7D, by using the method for processing an image according to the examples of the present disclosure, the background and the foreground may be well differentiated even though in case that illumination is uneven, and the error may be smaller than by using the existing methods.

By using the method for processing an image according to the present disclosure, local or global binarization information of an image may be combined for use so that the image may have a better robustness no matter the image is illuminated evenly or unevenly. A binarization threshold of the image may be comparatively accurately obtained even though the image is divided into fewer sub-regions so that both accuracy and efficiency may be taken into account. In addition, a concept of fitting matrix corresponding to an image division mode may be proposed. Time spent in on-line calculation may be reduced by calculating the fitting matrix in advance, thereby improving a threshold calculation speed.

FIG. 8 illustrates a device for processing an image according to the examples of the present disclosure. The device for processing an image 80 may include a processor 81, a machine-readable storage medium 82 and an internal bus 83. The processor 81 and the machine-readable storage medium 82 may intercommunicate via the internal bus 83. The above-described method for processing an image according to the examples of the present disclosure may be achieved by reading and executing, by the processor 81, machine-executable instructions in the machine-readable storage medium 82 corresponding to a binarization control logic 800.

The machine-readable storage medium may be any electronic, magnetic, optical or other physical storage devices, which may contain or store information such as executable instructions or data, etc. For example, the machine-readable storage medium may be a random access memory (RAM), a volatile memory, a nonvolatile memory, a flash memory, a memory drive (such as a hard disk drive), a solid state drive, any type of memory disks (such as an optical disk or a DVD and so on), or similar storage medium or a combination thereof. Furthermore, any machine-readable storage medium as recited herein may be non-transient.

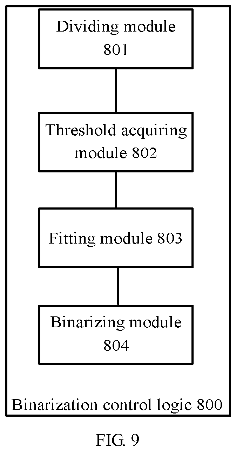

Further, the binarization control logic 800 is stored on the machine-readable storage medium 82. The control logic 800 functionally may include various functional modules as shown in FIG. 9.

A dividing module 801 may be configured to divide an image into a plurality of sub-regions.

A threshold acquiring module 802 may calculate a binarization threshold for each of the sub-regions.

A fitting module 803 may fit out a threshold surface of the image according to the binarization threshold of each of the sub-regions, wherein the threshold surface may include a binarization threshold corresponding to each pixel point in the image.

A binarizing module 804 may binarize the image based on the threshold surface.

In one example, the fitting module 803 may establish an equation for the threshold surface by taking the binarization threshold and a central coordinate of each of the sub-regions as variables. The fitting module 803 may fit out a coefficient of the equation by substituting binarization thresholds and central coordinates of at least three sub-regions as known values of the variables into the equation. The fitting module 803 may obtain a relational expression between a coordinate of a pixel point in the image and a binarization threshold of the pixel point based on the coefficient of the equation. The fitting module 803 may obtain a binarization threshold corresponding to each pixel point in the image by substituting a coordinate of the pixel point into the relational expression, and may determine the threshold surface of the image.

In one example, when fitting out the coefficient of the equation by substituting binarization thresholds and central coordinates of at least three sub-regions as known values of the variables into the equation, the binarizing module 804 may be further caused to: form a threshold matrix T with the binarization thresholds of the at least three sub-regions; form a central coordinate matrix A with the central coordinates of the at least three sub-regions; obtain a matrix relational expression T=Ax, wherein x is a coefficient matrix constituted with to-be-solved coefficients; and obtain the coefficient matrix x by solving the matrix relational expression by means of a least squares method.

In another example, when fitting out the coefficient of the equation by substituting binarization thresholds and central coordinates of at least three sub-regions as known values of the variables into the equation, the binarizing module 804 may be further caused to: form a threshold matrix T with the binarization thresholds of the at least three sub-regions; form a central coordinate matrix A with the central coordinates of the at least three sub-regiions; determine a fitting matrix B according to the central coordinate matrix A, wherein $B = (A^T A)^{-1} A^T$; and obtain a coefficient matrix x by multiplying the fitting matrix B by the threshold matrix T, wherein the coefficient matrix includes to-be-solved coefficients of the equation.

In the above examples, the threshold acquiring module 802 may acquire the binarization threshold of each sub-region according to an OTSU method or a mean value calculation method.

Detailed description of the method and the device provided by the examples of the present disclosure is made hereinabove, elaboration of the principle and mode of execution of the present disclosure is made by using specific examples herein, and the foregoing examples are merely intended to assist in understanding the method of the present disclosure and a core concept thereof. The invention is defined by the appended claims.

## Claims

1. A computer-implemented method of transforming an image into a binarized image, comprising:

   dividing (101) an original image into a plurality of sub-regions according to a predetermined division mode;
   calculating (102) a binarization threshold for each of the sub-regions;
   fitting (103) a threshold surface of the image according to the binarization threshold of each of the sub-regions obtained by the predetermined division mode, wherein the threshold surface comprises a binarization threshold corresponding to each pixel point in the image; and
   transforming (104) the image into a binarized image based on the threshold surface,
   wherein fitting the threshold surface of the image according to the binarization threshold of each of the sub-regions obtained by the predetermined division mode comprises:

   establishing an equation for the threshold surface by taking the binarization threshold and a central coordinate of each of the sub regions as variables;
   fitting a coefficient of the equation by substituting binarization thresholds and central coordinates of at least three sub-regions as known values of the variables into the equation;
   obtaining a relational expression between a coordinate of a pixel point in the image and a binarization threshold of the pixel point based on the coefficient of the equation;
   obtaining a binarization threshold corresponding to each pixel point in the image by substituting a coordinate of the pixel point into the relational expression; and
   determining the threshold surface of the image according to the obtained binarization thresholds;

wherein fitting the coefficient of the equation by substituting binarization thresholds and central coordinates of at least three sub-regions as known values of the variables into the equation comprises:

forming a threshold matrix T with the binarization thresholds of the at least three sub-regions;
forming a central coordinate matrix A with the central coordinates of at least three sub-regions, wherein the central coordinate matrix A comprises the central coordinates of the at least three sub-regions;
determining a fitting matrix B according to the central coordinate matrix A, wherein $B = (A^TA)^{-1}A^T$; and
obtaining a coefficient matrix x by multiplying the fitting matrix B by the threshold matrix T, wherein the coefficient matrix includes to-be-solved coefficients of the equation.

2. The method according to claim 1, wherein calculating the binarization threshold for each of the sub-regions comprises:
acquiring the binarization threshold of each sub-region according to an OTSU method.

3. The method according to claim 1, wherein calculating the binarization threshold for each of the sub-regions comprises:
acquiring the binarization threshold of each sub-region according to a mean value calculation method.

4. A device (80) for transforming an image into a binarized image, comprising:

a processor (81); and
non-volatile storage medium (82) stored with machine-executable instructions for a binarization control logic,
wherein by executing the machine-executable instructions the processor is caused to:

divide (101) an original image into a plurality of sub-regions according to a predetermined division mode;
calculate (102) a binarization threshold for each of the sub-regions;
fit (103) a threshold surface of the image according to the binarization threshold of each of the sub-region obtained by the predetermined division mode, wherein the threshold surface comprises a binarization threshold respectively corresponding to each pixel point in the image; and

transform (104) the image into a binarized image based on the threshold surface,
wherein fitting the threshold surface of the image according to the binarization threshold of each of the sub-regions obtained by the predetermined division mode comprises:

establishing an equation for the threshold surface by taking the binarization threshold and a central coordinate of each of the sub regions as variables;
fitting a coefficient of the equation by substituting binarization thresholds and central coordinates of at least three sub-regions as known values of the variables into the equation;
obtaining a relational expression between a coordinate of a pixel point in the image and a binarization threshold of the pixel point based on the coefficient of the equation;
obtaining a binarization threshold corresponding to each pixel point in the image by substituting a coordinate of the pixel point into the relational expression; and
determining the threshold surface of the image according to the obtained binarization thresholds;
wherein fitting the coefficient of the equation by substituting binarization thresholds and central coordinates of at least three sub-regions as known values of the variables into the equation comprises:

forming a threshold matrix T with the binarization thresholds of the at least three sub-regions;
forming a central coordinate matrix A with the central coordinates of at least three sub-regions, wherein the central coordinate matrix A comprises the central coordinates of the at least three sub-regions;
determining a fitting matrix B according to the central coordinate matrix A, wherein $B = (A^TA)^{-1}A^T$; and
obtaining a coefficient matrix x by multiplying the fitting matrix B by the threshold matrix T, wherein the coefficient matrix includes to-be-solved coefficients of the equation.

5. The device according to claim 4, wherein when calculating the binarization threshold for each of the sub-regions, the machine-executable instructions further cause the processor to:

acquire the binarization threshold of each sub-region according to an OTSU method.

6. The device according to claim 4, wherein when calculating the binarization threshold for each of the sub-regions, the machine-executable instructions further cause the processor to:

acquire the binarization threshold of each sub-region according to a mean value calculation method.

**Patentansprüche**

1. Computerimplementiertes Verfahren zum Umwandeln eines Bilds in ein binarisiertes Bild, umfassend:

Unterteilen (101) eines Originalbilds in eine Vielzahl von Teilregionen gemäß einem vorbestimmten Teilungsmodus;
Berechnen (102) eines Binarisierungsschwellenwerts für jede der Teilregionen;
Anpassen (103) einer Schwellenwertfläche des Bilds gemäß dem Binarisierungsschwellenwert jeder der Teilregionen, die durch den vorbestimmten Teilungsmodus erlangt werden, wobei die Schwellenwertfläche einen Binarisierungsschwellenwert umfasst, der jedem Pixelpunkt in dem Bild entspricht; und
Umwandeln (104) des Bilds in ein binarisiertes Bild basierend auf der Schwellenwertfläche,
wobei ein Anpassen der Schwellenwertfläche des Bilds gemäß dem Binarisierungsschwellenwert jeder der Teilregionen, die durch den vorbestimmten Teilungsmodus erlangt werden, Folgendes umfasst:

Erstellen einer Gleichung für die Schwellenwertfläche, indem der Binarisierungsschwellenwert und eine mittleren Koordinate jeder der Teilregionen als Variablen genommen werden;
Anpassen eines Koeffizienten der Gleichung durch Einsetzen von Binarisierungsschwellenwerten und mittleren Koordinaten von mindestens drei Teilregionen als bekannte Werte der Variablen in die Gleichung;
Erlangen eines relationalen Ausdrucks zwischen einer Koordinate eines Pixelpunkts in dem Bild und einem Binarisierungsschwellenwert des Pixelpunkts basierend auf dem Koeffizienten der Gleichung;
Erlangen eines Binarisierungsschwellenwerts, der jedem Pixelpunkt in dem Bild entspricht, durch Einsetzen einer Koordinate des Pixelpunkts in den relationalen Ausdruck; und
Bestimmen der Schwellenwertfläche des Bilds gemäß den erlangten Binarisierungsschwellenwerten;
wobei ein Anpassen des Koeffizienten der Gleichung durch Einsetzen von Binarisierungsschwellenwerten und mittleren Koordinaten von mindestens drei Teilregionen als bekannte Werte der Variablen in die Gleichung Folgendes umfasst;

Bilden einer Schwellenwertmatrix T mit den Binarisierungsschwellenwerten der mindestens drei Teilregionen;
Bilden einer mittleren Koordinatenmatrix A mit den mittleren Koordinaten von mindestens drei Teilregionen, wobei die mittlere Koordinatenmatrix A die mittleren Koordinaten der mindestens drei Teilregionen umfasst;
Bestimmen einer Anpassungsmatrix B gemäß der mittleren Koordinatenmatrix A, wobei $B = (A^T A)^{-1} A^T$; und
Erlangen einer Koeffizientenmatrix x durch Multiplizieren der Anpassungsmatrix B mit der Schwellenwertmatrix T, wobei die Koeffizientenmatrix die zu lösenden Koeffizienten der Gleichung beinhaltet.

2. Verfahren nach Anspruch 1, wobei ein Berechnen des Binarisierungsschwellenwerts für jede der Teilregionen Folgendes umfasst:
Erfassen des Binarisierungsschwellenwerts jeder Teilregion gemäß einem OTSU-Verfahren.

3. Verfahren nach Anspruch 1, wobei ein Berechnen des Binarisierungsschwellenwerts für jede der Teilregionen Folgendes umfasst:
Erfassen des Binarisierungsschwellenwerts jeder Teilregion gemäß einem Mittelwertberechnungsverfahren.

4. Vorrichtung (80) zum Umwandeln eines Bilds in ein binarisiertes Bild, umfassend:

einen Prozessor (81); und
nichtflüchtiges Speichermedium (82), auf dem maschinenausführbare Anweisungen für eine Binarisierungssteuerlogik gespeichert sind,
wobei durch Ausführen der maschinenausführbaren Anweisungen der Prozessor zu Folgendem veranlasst wird:

Unterteilen (101) eines Originalbilds in eine Vielzahl von Teilregionen gemäß einem vorbestimmten Teilungsmodus;
Berechnen (102) eines Binarisierungsschwellenwerts für jede der Teilregionen;
Anpassen (103) einer Schwellenwertfläche des Bilds gemäß dem Binarisierungsschwellenwert jeder der Teilregionen, die durch den vorbestimmten Teilungsmodus erlangt werden, wobei die Schwellenwertfläche einen Binarisierungsschwellenwert umfasst, der jeweils jedem Pixelpunkt in dem Bild entspricht; und

Umwandeln (104) des Bilds in ein binarisiertes Bild basierend auf der Schwellenwertfläche, wobei ein Anpassen der Schwellenwertfläche des Bilds gemäß dem Binarisierungsschwellenwert jeder der Teilregionen, die durch den vorbestimmten Teilungsmodus erlangt werden, Folgendes umfasst:

Erstellen einer Gleichung für die Schwellenwertfläche, indem der Binarisierungsschwellenwert und eine mittleren Koordinate jeder der Teilregionen als Variablen genommen werden;
Anpassen eines Koeffizienten der Gleichung durch Einsetzen von Binarisierungsschwellenwerten und mittleren Koordinaten von mindestens drei Teilregionen als bekannte Werte der Variablen in die Gleichung;
Erlangen eines relationalen Ausdrucks zwischen einer Koordinate eines Pixelpunkts in dem Bild und einem Binarisierungsschwellenwert des Pixelpunkts basierend auf dem Koeffizienten der Gleichung;
Erlangen eines Binarisierungsschwellenwerts, der jedem Pixelpunkt in dem Bild entspricht, durch Einsetzen einer Koordinate des Pixelpunkts in den relationalen Ausdruck; und
Bestimmen der Schwellenwertfläche des Bilds gemäß den erlangten Binarisierungsschwellenwerten;
wobei ein Anpassen des Koeffizienten der Gleichung durch Einsetzen von Binarisierungsschwellenwerten und mittleren Koordinaten von mindestens drei Teilregionen als bekannte Werte der Variablen in die Gleichung Folgendes umfasst;
Bilden einer Schwellenwertmatrix T mit den Binarisierungsschwellenwerten der mindestens drei Teilregionen;
Bilden einer mittleren Koordinatenmatrix A mit den mittleren Koordinaten von mindestens drei Teilregionen, wobei die mittlere Koordinatenmatrix A die mittleren Koordinaten der mindestens drei Teilregionen umfasst;
Bestimmen einer Anpassungsmatrix B gemäß der mittleren Koordinatenmatrix A, wobei $B = (A^TA)^{-1}A^T$; und
Erlangen einer Koeffizientenmatrix x durch Multiplizieren der Anpassungsmatrix B mit der Schwellenwertmatrix T, wobei die Koeffizientenmatrix die zu lösenden Koeffizienten der Gleichung beinhaltet.

5. Vorrichtung nach Anspruch 4, wobei beim Berechnen des Binarisierungsschwellenwerts für jede der Teilregionen die maschinenausführbaren Anweisungen den Prozessor ferner zu Folgendem veranlassen:
Erfassen des Binarisierungsschwellenwerts jeder Teilregion gemäß einem OTSU-Verfahren.

6. Vorrichtung nach Anspruch 4, wobei beim Berechnen des Binarisierungsschwellenwerts für jede der Teilregionen die maschinenausführbaren Anweisungen den Prozessor ferner zu Folgendem veranlassen:
Erfassen des Binarisierungsschwellenwerts jeder Teilregion gemäß einem Mittelwertberechnungsverfahren.

**Revendications**

1. Procédé mis en œuvre par ordinateur pour transformer une image en une image binarisée, comprenant le fait de :

diviser (101) une image d'origine en une pluralité de sous-régions selon un mode de division prédéterminé ;
calculer (102) un seuil de binarisation pour chacune des sous-régions ;
ajuster (103) une surface de seuil de l'image en fonction du seuil de binarisation de chacune des sous-régions obtenues par le mode de division prédéterminé, dans laquelle la surface de seuil comprend un seuil de binarisation correspondant à chaque point de pixel dans l'image ; et
transformer (104) l'image en une image binarisée sur la base de la surface de seuil ;
dans lequel l'ajustement de la surface de seuil de l'image en fonction du seuil de binarisation de chacune des sous-régions obtenues par le mode de division prédéterminé comprend le fait de :

établir une équation pour la surface de seuil en prenant le seuil de binarisation et une coordonnée centrale de chacune des sous-régions en tant que variables ;
ajuster un coefficient de l'équation en substituant les seuils de binarisation et les coordonnées centrales d'au moins trois sous-régions en tant que des valeurs connues des variables dans l'équation ;
obtenir une expression relationnelle entre une coordonnée d'un point de pixel dans l'image et un seuil de binarisation du point de pixel sur la base du coefficient de l'équation ;
obtenir un seuil de binarisation correspondant à chaque point de pixel dans l'image en substituant une coordonnée du point de pixel dans l'expression relationnelle ; et
déterminer la surface de seuil de l'image en fonction des seuils de binarisation obtenus ;

dans lequel l'ajustement du coefficient de l'équation en substituant les seuils de binarisation et les coordonnées centrales d'au moins trois sous-régions en tant que des valeurs connues des variables dans l'équation comprend le fait de :

former une matrice de seuil T avec les seuils de binarisation desdites au moins trois sous-régions ;
former une matrice de coordonnées centrales A avec les coordonnées centrales d'au moins trois sous-régions, dans laquelle la matrice de coordonnées centrales A comprend les coordonnées centrales desdites au moins trois sous-régions ;
déterminer une matrice d'ajustement B en fonction de la matrice de coordonnées centrales A, dans laquelle $B = (A^T A)^{-1} A^T$ ; et obtenir une matrice de coefficients x en multipliant la matrice d'ajustement B par la matrice de seuil T, dans laquelle la matrice de coefficients inclut des coefficients à résoudre de l'équation.

2. Procédé selon la revendication 1, dans lequel le calcul du seuil de binarisation de chacune des sous-régions comprend le fait de :
acquérir le seuil de binarisation de chaque sous-région selon une méthode d'Otsu.

3. Procédé selon la revendication 1, dans lequel le calcul du seuil de binarisation pour chacune des sous-régions comprend le fait de :
acquérir le seuil de binarisation de chaque sous-région selon un procédé de calcul de valeur moyenne.

4. Dispositif (80) destiné à transformer une image en une image binarisée, comprenant :

un processeur (81) ; et
un support de stockage non volatile (82) stocké avec des instructions exécutables par machine pour une logique de commande de binarisation ;
dans lequel, lors de l'exécution des instructions exécutables par machine, le processeur est amené à :

diviser (101) une image d'origine en une pluralité de sous-régions selon un mode de division prédéterminé ;
calculer (102) un seuil de binarisation pour chacune des sous-régions ;
ajuster (103) une surface de seuil de l'image en fonction du seuil de binarisation de chacune des sous-régions obtenues par le mode de division prédéterminé, dans laquelle la surface de seuil comprend un seuil de binarisation correspondant respectivement à chaque point de pixel dans l'image ; et
transformer (104) l'image en une image binarisée sur la base de la surface de seuil ;
dans lequel l'ajustement de la surface de seuil de l'image en fonction du seuil de binarisation de chacune des sous-régions obtenues par le mode de division prédéterminé comprend le fait de :

établir une équation pour la surface de seuil en prenant le seuil de binarisation et une coordonnée centrale de chacune des sous-régions en tant que variables ;
ajuster un coefficient de l'équation en substituant les seuils de binarisation et les coordonnées centrales d'au moins trois sous-régions en tant que des valeurs connues des variables dans l'équation ;
obtenir une expression relationnelle entre une coordonnée d'un point de pixel dans l'image et un seuil de binarisation du point de pixel sur la base du coefficient de l'équation ;
obtenir un seuil de binarisation correspondant à chaque point de pixel dans l'image en substituant une coordonnée du point de pixel dans l'expression relationnelle ; et
déterminer la surface de seuil de l'image en fonction des seuils de binarisation obtenus ;
dans lequel l'ajustement du coefficient de l'équation en substituant les seuils de binarisation et les coordonnées centrales d'au moins trois sous-régions en tant que des valeurs connues des variables dans l'équation comprend le fait de :

former une matrice de seuil T avec les seuils de binarisation desdites au moins trois sous-régions ;

former une matrice de coordonnées centrales A avec les coordonnées centrales d'au moins trois sous-régions, dans laquelle la matrice de coordonnées centrales A comprend les coordonnées centrales desdites au moins trois sous-régions ;

déterminer une matrice d'ajustement B en fonction de la matrice de coordonnées centrales A, dans laquelle $B = (A^T A)^{-1} A^T$ ; et

obtenir une matrice de coefficients x en multipliant la matrice d'ajustement B par la matrice de seuil T, dans laquelle la matrice de coefficients inclut des coefficients à résoudre de l'équation.

5. Dispositif selon la revendication 4, dans lequel, lors du calcul du seuil de binarisation pour chacune des sous-régions, les instructions exécutables par machine amènent en outre le processeur à :

acquérir le seuil de binarisation de chaque sous-région selon une méthode d'Otsu.

6. Dispositif selon la revendication 4, dans lequel, lors du calcul du seuil de binarisation pour chacune des sous-régions, les instructions exécutables par machine amènent en outre le processeur à :

acquérir le seuil de binarisation de chaque sous-région selon un procédé de calcul de valeur moyenne.

Divide an inputted image into a plurality of sub-regions — 101

Calculate a binarization threshold for each of the sub-regions — 102

Fit out a threshold surface of the image according to the binarization thresholds of the sub-regions, wherein the threshold surface may include binarization thresholds respectively corresponding to each pixel point in the image — 103

Binarize the image based on the threshold surface — 104

FIG. 1

Establish an equation for the threshold surface by taking the binarization threshold of each sub-region and a central coordinate of the sub-region as variables — 201

Fit out a coefficient of the equation by substituting binarization thresholds and central coordinates of at least three sub-regions as known values of the variables into the equation — 202

Obtain a relational expression between a coordinate of a pixel point in the image and a binarization threshold of the pixel point based on the coefficient of the equation — 203

Obtain a binarization threshold corresponding to each pixel point in the image by substituting a coordinate of the pixel point into the relational expression and determine the threshold surface of the image according to the obtained binarization thresholds — 204

FIG. 2

|   |   |   |
|---|---|---|
| 1 | 2 | 3 |
| 4 | 5 | 6 |
| 7 | 8 | 9 |

FIG. 3A

```
0.17 0.17 1
0.50 0.17 1
0.83 0.17 1
0.17 0.50 1
0.50 0.50 1
0.83 0.50 1
0.17 0.83 1
0.50 0.83 1
0.83 0.83 1
```

FIG. 3B

```
-0.5051      0     0.5051  -0.5051      0      0.5051  -0.5051      0     0.5051
-0.5051  -0.5051  -0.5051      0        0         0     0.5051   0.5051  0.5051
 0.6162   0.3636   0.1111   0.3636   0.1111  -0.1414   0.1111  -0.1414  -0.3939
```

FIG. 3C

|   |   |
|---|---|
| 1 | 2 |
| 3 | 3 |

FIG. 4A

```
0.25 0.25 1
0.75 0.25 1
0.25 0.75 1
0.75 0.75 1
```

FIG. 4B

```
-1.0000  -1.0000   1.0000   1.0000
-1.0000   1.0000  -1.0000   1.0000
 1.2500   0.2500   0.2500  -0.7500
```

FIG. 4C

FIG. 5A

FIG. 5B

FIG. 5C

FIG. 5D

FIG. 6A

FIG. 6B

FIG. 6C

FIG. 6D

FIG. 7A

FIG. 7B

FIG. 7C

FIG. 7D

FIG. 8

FIG. 9

**EP 3 214 603 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201610118800

### Non-patent literature cited in the description

- **CAI JINHAI et al.** Surface fitting for individual image thresholding and beyond. *IET IMAGE PROCES, IET, UK*, 01 August 2013, vol. 7 (6), ISSN 1751-9659, 596-605